# EUROPÄISCHE PATENTSCHRIFT

(11) **EP 2 345 817 B1**
(45) Veröffentlichungstag und Bekanntmachung des Hinweises auf die Patenterteilung: **11.09.2013**
(21) Anmeldenummer: 11151253.9
(22) Anmeldetag: 18.01.2011
(51) Int. Cl.: F16B 39/28, F16H 25/20, F16H 25/22, F16H 25/24

(54) **Gewindetrieb aus Kunststoff und Metall mit einer Gewindemutter und einer Gewindespindel**
Plastic and metal thread drive with a threaded nut and a spindle
Vis de réglage en matière synthétique et métal dotée d'une vis filetée et d'un écrou fileté

(30) Priorität: 19.01.2010 DE 102010005145
(43) Veröffentlichungstag der Anmeldung: 20.07.2011
(73) Patentinhaber: Honeywell Technologies Sarl, 1180 Rolle (CH)
(72) Erfinder: Edelmann, Steffen, 69429, Waldbrunn (DE); Lemmerz, Hans-Peter, 74834, Elztal (DE); Baier, Doris, 74831, Gundelsheim (DE)
(74) Vertreter: Graefe, Jörg

(56) Entgegenhaltungen:
- DE-A1-102007 017 129
- DE-C1- 3 505 467
- FR-A5- 2 083 272

## Beschreibung

Die vorliegende Erfindung betrifft einen Gewindetrieb mit einer Mutter und einer Spindel, wobei die Mutter und die Spindel je ein Trapezgewinde aufweisen, die ineinander greifen. Der Gewindetrieb ist so ausgestaltet, dass entweder
die Mutter zumindest in einem Bereich aus Metall besteht und das Trapezgewinde der Mutter in diesem Bereich aus Metall ausgebildet ist und die Spindel zumindest in einem Bereich aus Kunststoff besteht und das Trapezgewinde der Spindel in diesem Bereich aus Kunststoff ausgebildet ist, oder die Mutter zumindest in einem Bereich aus Kunststoff besteht und das Trapezgewinde der Mutter in diesem Bereich aus Kunststoff ausgebildet ist und die Spindel zumindest in einem Bereich aus Metall besteht und das Trapezgewinde der Spindel in diesem Bereich aus Metall ausgebildet ist.

Die Trapezgewinde der Mutter und der Spindel weisen Flanken auf, die den Gewindegang begrenzen. An die Flanken schließen sich im Übergangsbereich zu den Gewindespitzen erste Rundungen mit je einem ersten Radius an. Der Übergang zwischen den Flanken und den Gewindegründen erfolgt über eine zweite Rundung mit je einem zweiten Radius.

Trapezgewinde sind insbesondere in der DIN 103, Teil 1 bis 5 und Teil 7 genormt. Normteile mit Trapezgewinden werden in großer Stückzahl von verschiedenen Anbietern hergestellt und können daher kostengünstig bezogen werden.

Aus Kostengründen oder funktionalen Gründen werden die Spindeltriebe häufig zum Teil aus Kunststoffteilen hergestellt. Üblich ist es beispielsweise, dass die Spindel aus Metall, zum Beispiel Edelstahl hergestellt wird, während die Mutter aus Kunststoff hergestellt wird. Ebenso ist es denkbar, dass nur Bereiche der Mutter aus Kunststoff hergestellt sind und die Mutter im Übrigen aus Metall hergestellt ist.

Das Dokument DE 10 2007 017129 A1 offenbart alle Merkmale des Oberbegriffs des Anspruchs 1 und bildet den nächstligenden Stand der Technik.

Die eingangs beschriebenen Gewindetriebe werden beispielsweise in Armaturen, insbesondere in Ventilen verwendet. Über die Gewindetriebe kann die Öffnung des Ventils eingestellt werden. Über ein Handrad oder einen Motor oder dergleichen werden die Spindeln der verwendeten Gewindetriebe angetrieben, wodurch entweder der Ventilsitz oder der Ventilkegel verschoben werden.
Aufgrund von unterschiedlichen Abnutzungsverhalten und dem gewählten Gewindetyp werden die einen Bereiche, in denen das Trapezgewinde ausgebildet ist, mehr abgenutzt als die komplementären Bereiche. Wegen der starken Abnutzung kann es zu Ausfällen des Spindeltriebes kommen.

Hier setzt die vorliegende Erfindung an.

Der Erfindung liegt das Problem zugrunde, einen Spindeltrieb der eingangs genannten Art so zu verbessern, dass es gegenüber den bekannten Spindeltrieben zu einer reduzierten Abnutzung kommt.

Dieses Problem wird erfindungsgemäß dadurch gelöst, dass der erste Radius der ersten Rundungen in den Bereichen aus Metall und/oder aus Kunststoff sich aus einem Spitzenspiel mit einem Faktor größer als 0,5 berechnet. Zum Beispiel kann der erste Radius zwei Drittel des Spitzenspiels betragen. Die zweite Rundung hat vorteilhaft einen zweiten Radius nach Norm. Das Spitzenspiel ist für gängige Gewinde in den Normen vorgegeben. Für ein Gewinde TR6x1, das nicht in der Normenreihe liegt, kann das Spitzenspiel mit 0,15 mm gewählt sein.

Im Gegensatz zur Erfindung ist der Faktor zwischen dem ersten Radius und dem Spitzenspiel bei normgerechten Trapezgewinden 0,5. Untersuchungen haben gezeigt, dass es zu Abnutzungen insbesondere in den Bereichen kommt, in denen Kanten der Trapezgewinde an den Übergängen der Flanken zu den Gewindespitzen einwirken. Bei den bisher üblichen Gewindetrieben nach dem Stand der Technik sind die Trapezgewinde entsprechend der gängigen Normen hergestellt. Sowohl bei der Spindel als auch bei der Mutter handelt es sich um Bauteile mit normgerechten Trapezgewinden. Dieses hat in der Vergangenheit die Materialbeschaffung erleichtert, da man auf beliebige Lieferanten zurückgreifen kann, die Muttern oder Spindeln in der gewünschten Qualität herstellen. In der Praxis wurden ausnahmslos solche normgerechten Bauteile verwendet.

Für die Erfindung wird nun der preiswerten
Beschaffungsmöglichkeiten von normgerechten Bauteilen zum Trotz auf individuell hergestellte Spindeln oder Muttern mit Trapezgewinden zurückgegriffen. Durch die Abwendung von den normgerechten Teilen nimmt man eine stark eingeschränkte Möglichkeit für die Beschaffung der Bauteile in Kauf. Andererseits erreicht man durch die erfindungsgemäße Änderung gegenüber der Norm, dass die Kanten an den Übergängen zwischen den Flanken und der Gewindespitze stärker abgerundet sind. Der erste Radius der ersten Rundungen ist dabei größer als der Radius, um den die Kanten an den genannten Übergängen bei den bisher bekannten normgerechten Trapezgewinden abgerundet sind.

Durch das Abrunden der Übergänge zwischen den Flanken und der Gewindespitze mit einem größeren als bisher üblichen Radius wird ein geringerer Abrieb erreicht. Die erfindungsgemäßen Gewindetriebe sind daher ausfallsicherer als die bisher bekannten Gewindetriebe. Die Erfindung erschöpft sich jedoch nicht nur in dem Gedanken des Abrundens der Kanten. So kann der erste Radius nicht beliebig vergrößert werden. Der gewählte erste Radius muss erfindungsgemäß zwar den Anforderungen an den geringeren Abrieb genügen. Darüber hinaus sollte der erste Radius so gewählt sein, dass die Trapezgewinde mit vertretbarem Aufwand und vertretbaren Werkzeugkosten hergestellt werden können. Außerdem darf die Fläche der Flanken durch Vergrößern des ersten Radius nicht beliebig verkleinert werden, da dadurch die Kraftübertragung zwischen der Mutter und der Spindel beeinträchtigt werden kann. Außerdem müssen Toleranzen eingehalten werden, wobei für die Einhaltung der Toleranzen auf die Erfahrungswerte zurückgegriffen wird, die ihren Niederschlag in der Norm für die Trapezgewinde gefunden haben. Es ist daher von Vorteil, wenn der Flankenfuß des gegenüber der Norm veränderten Trapezgewindes größer ist als das Doppelte des ersten Radius.

Unter Umständen ist es vorteilhaft, wenn der erste Radius in den Bereichen aus Metall und in Bereichen aus Kunststoff gegenüber der Norm verändert ist..

Ein erfindungsgemäßer Spindeltrieb kann vorteilhaft in einem Ventil zum Einstellen der Öffnungsstellung des Ventils genutzt werden.

Ein Ausführungsbeispiel für einen erfindungsgemäßen Spindeltrieb ist in der Zeichnung schematisch dargestellt. Die
- Fig. 1: zeigt einen Längsschnitt durch einen Spindeltrieb und
- Fig. 2: zeigt ein Detail aus dem Längsschnitt durch den Spindeltrieb nach Figur 1 in vergrößerter Darstellung.

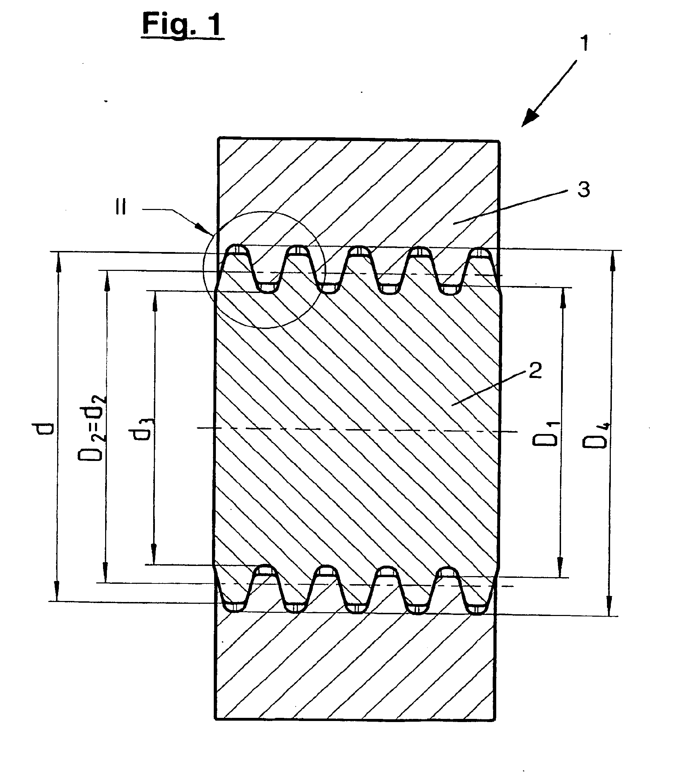

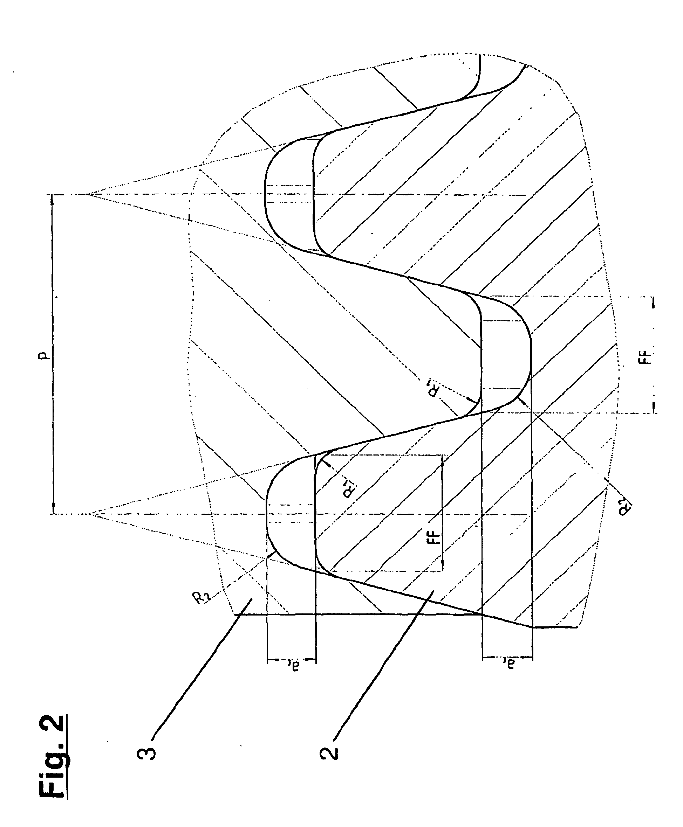

Der in der Figur 1 und 2 schematisch dargestellte Spindeltrieb 1 weist eine Spindel 2 und eine Mutter 3 auf. Sowohl die Spindel 2 als auch die Mutter 3 weisen ein Trapezgewinde auf. Das Trapezgewinde ist an der Spindel als Außengewinde und an der Mutter als Innengewinde ausgebildet. Die Trapezgewinde sind im Wesentlichen normgerecht ausgebildet. Die Gewindegeometrie weicht im Bereich der Übergänge zwischen den Flanken und der Gewindespitze an der beispielsweise aus Metall hergestellten Spindel 2 und der aus Kunststoff hergestellten Mutter 3 ab. Die Übergänge sind mit ersten Radien R1 abgerundet, die größer als die Radien bei normgerechten Trapezgewinden sind.

Die ersten Radien R1 betragen zwei Drittel des Spitzenspiels ac. Außerdem ist der Flankenfuß FF mehr als doppelt so groß wie der erste Radius R1. Dadurch wird der Abrieb verringert, der durch das Außengewinde der Spindel 2 in dem Innengewinde der aus Kunststoff hergestellten Mutter 3 beim Benutzen des Gewindetriebs entsteht. Gleichzeitig ist aber eine ausreichende Kraftübertragung zwischen der Mutter 3 und der Spindel 2 gewährleistet.

Dagegen sind die zweiten Radien R2 entsprechend der Norm ausgeführt.

## Patentansprüche

1. Gewindetrieb (1) mit einer Mutter und einer Spindel, wobei
- die Mutter (3) und die Spindel (2) je ein Trapezgewinde aufweisen, die ineinander greifen,
- entweder
- die Mutter (3) zumindest in einem Bereich aus Metall und die Spindel (2) zumindest in einem Bereich aus Kunststoff besteht und
- das Trapezgewinde der Mutter (3) in dem Bereich aus Metall und das Trapezgewinde der Spindel (2) in dem Bereich aus Kunststoff ausgebildet ist
oder
- die Mutter (3) zumindest in einem Bereich aus Kunststoff und die Spindel (2) zumindest in einem Bereich aus Metall besteht und
- das Trapezgewinde der Mutter (3) in dem Bereich aus Kunststoff und das Trapezgewinde der Spindel (2) in dem Bereich aus Metall ausgebildet ist,
- die Trapezgewinde Flanken haben und sich an die Flanken im Bereich der Gewindespitze eine erste Rundung und im Bereich des Gewindegrundes eine zweite Rundung anschließen,
- zwischen den Gewindespitzen und den Gewindegründen ein Spitzenspiel (ac) vorgesehen ist,
**dadurch gekennzeichnet, dass**
die erste Rundung in den Bereichen aus Metall und/oder aus Kunststoff einen Radius (R1) hat, der größer als die Hälfte des Spitzenspiels ist, insbesondere zwei Drittel des Spitzenspiels (ac) beträgt.

2. Gewindetrieb nach Anspruch 1, **dadurch gekennzeichnet, dass** die zweite Rundung einen Radius (R2) hat, der die Hälfte des Spitzenspiels beträgt.

3. Gewindetrieb nach einem der Ansprüche 1 bis 2, **dadurch gekennzeichnet, dass** in dem Bereich aus Metall und/oder aus Kunststoff die zweite Rundung einen Radius nach Norm hat.

4. Ventil mit einem Gewindetrieb zum Einstellen einer Öffnungsstellung des Ventils, **dadurch gekennzeichnet, dass** der Gewindetrieb nach einem der Ansprüche 1 bis 3 ausgebildet ist.

## Claims

1. Screw drive (1) having a nut and a spindle,
- the nut (3) and the spindle (2) having in each case one trapezoidal thread which engage into one another,
- either
- the nut (3) being composed of metal at least in one region and the spindle (2) being composed of plastic at least in one region, and
- the trapezoidal thread of the nut (3) being formed in the region made from metal and the trapezoidal thread of the spindle (2) being formed in the region made from plastic,
- or
- the nut (3) being composed of plastic at least in one region and the spindle (2) being composed of metal at least in one region, and
- the trapezoidal thread of the nut (3) being formed in the region made from plastic and the trapezoidal thread of the spindle (2) being formed in the region made from metal,
- the trapezoidal threads having flanks, and a first rounded portion adjoining the flanks in the region of the thread crest and a second rounded portion adjoining the flanks in the region of the thread groove,
- a crest play (ac) being provided between the thread crests and the thread grooves,
**characterized in that**
the first rounded portion in the regions made from metal and/or from plastic has a radius (R1) which is greater than half the crest play, in particular is two thirds of the crest play (ac).

2. Screw drive according to Claim 1, **characterized in that** the second rounded portion has a radius (R2) which is half the crest play.

3. Screw drive according to either of Claims 1 and 2, **characterized in that** the second rounded portion has a nominal radius in the region made from metal and/or from plastic.

4. Valve having a screw drive for setting an open position of the valve, **characterized in that** the screw drive is configured according to one of Claims 1 to 3.

## Revendications

1. Vis de réglage (1) avec un écrou et une vis, dans laquelle:
- l'écrou (3) et la vis (2) présentent chacun un filet trapézoïdal en prise l'un avec l'autre,
- soit
- l'écrou (3) est constitué de métal au moins dans une région et la vis (2) est constituée de matière synthétique au moins dans une région et
- le filet trapézoïdal de l'écrou (3) est formé dans la région en métal et le filet trapézoïdal de la vis (2) est formé dans la région en matière synthétique,
- soit
- l'écrou (3) est constitué de matière synthétique au moins dans une région et la vis (2) est constituée de métal au moins dans une région et
- le filet trapézoïdal de l'écrou (3) est formé dans la région en matière synthétique et le filet trapézoïdal de la vis (2) est formé dans la région en métal,
- les filets trapézoïdaux comportent des flancs et un premier arrondi se raccorde aux flancs dans la région de la pointe de filet et un deuxième arrondi se raccorde aux flancs dans la région du fond de filet,
- il est prévu un jeu de vis (ac) entre les pointes de filet et les fonds de filet,
**caractérisée en ce que** le premier arrondi présente, dans les régions en métal et/ou en matière synthétique, un rayon (R1), qui est plus grand que la moitié du jeu de pointe, et vaut en particulier les deux tiers du jeu de pointe (ac).

2. Vis de réglage selon la revendication 1, **caractérisée en ce que** le deuxième arrondi présente un rayon (R2), qui vaut la moitié du jeu de pointe.

3. Vis de réglage selon l'une quelconque des revendications 1 à 2, **caractérisée en ce que** le deuxième arrondi présente, dans la région en métal et/ou dans la région en matière synthétique, un rayon conforme à une norme.

4. Soupape avec une vis de réglage pour le réglage d'une position d'ouverture de la soupape, **caractérisée en ce que** la vis de réglage est réalisée selon l'une quelconque des revendications 1 à 3.
